# EUROPEAN PATENT SPECIFICATION

(11) **EP 1 125 492 B1**
(45) Date of publication and mention of the grant of the patent: **07.02.2007**
(21) Application number: 01201814.9
(22) Date of filing: 22.11.1994
(51) Int. Cl.: A01J 7/00, A01J 5/08, A01J 5/017

(54) **A method using a construction for automatically milking animals**
Verwendung einer Konstruktion zum automatischen Melken von Tieren
Utilisation d'une construction pour la traite automatique d'animaux

(30) Priority: 26.11.1993 NL 9302048; 20.04.1994 NL 9400630
(43) Date of publication of application: 22.08.2001
(62) Divisional of application: 94203391.1
(73) Proprietor: MAASLAND N.V., 3147 PA Maassluis (NL)
(72) Inventor: Van der Lely, Cornelis, 6300 Zug (CH)
(74) Representative: Corten, Maurice Jean F.M.

(56) References cited:
- EP-A- 0 213 660
- EP-A- 0 347 004
- WO-A-85/02973
- GB-A- 2 007 486
- US-A- 4 941 433
- US-A- 5 069 160

## Description

The invention relates to a method using a construction for milking animals, such as cows, according to the preamble of claim 1.

Such a method is known from WO 85/02973.

The invention has for its object to improve such a method.

According to the invention, this is achieved by the features of claim 1.

According to another aspect of the invention, this is achieved in that the construction includes detection means, with the aid of which the position of the animal, or at least of part of the animal, relative to a milking parlour can be determined, and on the basis of which position, using a computer, a teat cup is moved close to the bottom end of a teat, whilst furthermore means are present, with the aid of which the teat is sucked into the upper end of the teat cup. In accordance with a further feature of the invention, the means include an air pump, by means of which a relatively strong suction air current can be applied near and above the aperture of a teat cup. Under the influence of the suction air current, a teat located near and above the aperture of the teat cup will be sucked into the teat cup by the suction air current. This has for its advantage that also a teat cup, whose aperture is not positioned accurately under a teat, can be connected to the relevant teat. The invention, therefore, also relates to a construction for milking animals, such as cows, comprising a milking robot with teat cups, characterized in that the construction includes an air pump which effects that, at least for the purpose of connecting the teat cups to the teats of an animal to be milked, a relatively strong suction air current is present near and above the aperture of a teat cup.

So as to improve the connection of a teat to a teat cup, the milking robot has, in accordance with a further feature of the invention, a holder in which the teat cup is supported, whilst the teat cup is also freely movable in height relative to the relevant holder under the influence of the suction air current. During connecting of the teat cup to the relevant teat, the teat cup can be sucked to the relevant teat under the influence of the suction air current. The invention, therefore, also relates to a construction for milking animals, such as cows, comprising a milking robot with teat cups, characterized in that the milking robot includes a holder for a teat cup, whilst the teat cup is also freely movable in height relative to the relevant holder under the influence of the suction air current.

Before a teat cup can be connected to a teat under the influence of the suction air current, the position of the teat cups is altered, in accordance with a further feature of the invention, with the aid of data stored in the computer about the position of the teats of a specific animal, utilizing a pivotal arm construction with incorporated electric motor, e.g. a stepping motor. In accordance with a further feature of the invention, each electric motor includes a free-wheel device, which becomes operative for an electric motor after the computer has supplied a signal indicating that a teat has been positioned in or near a teat cup. By starting the free-wheel device, the teat cups are freely movable in a horizontal plane, whereby the teat cups are moved advantageously to under the teats. In accordance with a still further feature of the invention, each of the electric motors includes a sensor which, after the teat cups have been connected to the teats, passes the position of the teat cups on to the computer, whereafter the co-ordinates are used again for a subsequent milking turn of the relevant animal for positioning the teat cups relative to each other. By always utilizing the co-ordinates determined last, no or hardly any problems are experienced during connecting of the teat cups as regards alteration of the teat positions during the lactation period. It should be noted that the teat co-ordinates can also be determined by means of a different type of sensor, such as e.g. a laser sensor, an ultrasonic sensor, etc., which forwards the teat co-ordinates to the computer, whereafter the co-ordinates are used again during a subsequent milking turn of the relevant animal for positioning the teat cups. For the subsequent milking turn, the sensor determines the co-ordinates again and the old co-ordinates are replaced by these newly determined teat co-ordinates, should the latter have changed. In a preferred embodiment, both sensors (the laser and the sensor at the electric motors) are utilized to check the teat co-ordinates and to replace them, if necessary.

In accordance with a still further feature of the invention, each time an animal is to be milked, the teat co-ordinates are determined and compared to the teat co-ordinates of the animal stored last, whilst said last teat co-ordinates are replaced by the said first co-ordinates if there is question of a discrepancy. In this manner the teat co-ordinates of a relevant animal are up-dated during every milking turn.

In accordance with a still further feature of the invention, the factor is an animal-dependent factor, and for each animal an associated factor has been stored in the memory unit.

In accordance with a still further feature of the invention, at least at the beginning of a lactation period of an animal the detection area in which the detection means are detecting the teats is enlarged. So, even if the positions of the teats of the animal are changed drastically, the teats of the animal will be in the detection area and thus be detected by the detection means. In a preferred embodiment, at the beginning of a lactation period of the animal the detection is started at a lower level with respect to the ground than during the proceeding of said lactation period of the animal.

In accordance with a further feature of the invention, at the beginning of a lactation period of an animal an area in which a separate teat can be expected to be detected is updated and enlarged.

In accordance with still another feature of the invention, the angle over which the detection signal is transmitted is enlarged. In a preferred embodiment, the detection signal is constituted by a scanning laser beam.

In accordance with the invention, it is furthermore important that at the beginning of a next lactation period the animal will not be completely milked out. On the basis of historical data of a previous lactation period, a computer determines the milk yield and/or milking time to be expected at the beginning of a new lactation period in the first milking turn(s). The computer thereafter determines a threshold value, on the basis of which the teat cups are disconnected prematurely, i.e. before the anticipated milk yield or milking time, as the case may be. Thus, it is prevented that in the initial stage of the lactation period too much calcium is withdrawn from the animal, which might cause diseases such as "milk disease" (weakening of the muscles). The above-mentioned measures enable the animal, after having been "dry" to gradually adapt herself to the next lactation period.

In a preferred embodiment, not further described, the data pertaining to milk yield, milking time, teat position and correction factor are stored for each udder quarter, so that the said procedure can also be applied for each udder quarter of the animal.

Since an animal does not always assume the same position in the milking box, the construction in accordance with the invention includes detection means, with the aid of which the position of at least part of the animal relative to a reference point can be determined, which detection means comprise mechanical sensors that press against the hind side and against the flanks of an animal. In accordance with a further feature of the invention, the mechanical sensors include a pneumatic cylinder, the position of whose piston is electronically determined and passed on to a computer, whilst the end of the piston rod of the pneumatic cylinder has a plate-like stop which can be pressed against the animal after she has taken up her position in a milking box.

Thus, the position of the animal can be determined accurately and the teat cups can be positioned very accurately under the teats of the animal. Thereafter, the teat cups can be connected to the teats and the animal can be milked automatically by means of the milking robot.

For a better understanding of the invention and to show how the same may be carried into effect, reference will now be made, by way of example, to the accompanying drawings, in which:
Figure 1 is a plan view of a milking box containing a milking robot and the contours of a milch animal, in the present case a cow;
Figure 2 shows, to an enlarged scale, the end of the milking robot of Figure 1, a pair of teat cups being connected via one pivotal arm construction to the end of the robot arm;
Figure 3 is a side view of the end of the robot arm, taken on the line III-III in Figure 2;
Figure 4 is a longitudinal cross-sectional view of a teat cup with a holder;
Figure 5 is a plan view of a second embodiment of a milking box with a robot arm and detection means;
Figure 6 is a side view of the milking box as shown in Figure 5, and
Figure 7 shows a detail of the detection means as shown in Figures 5 and 6.

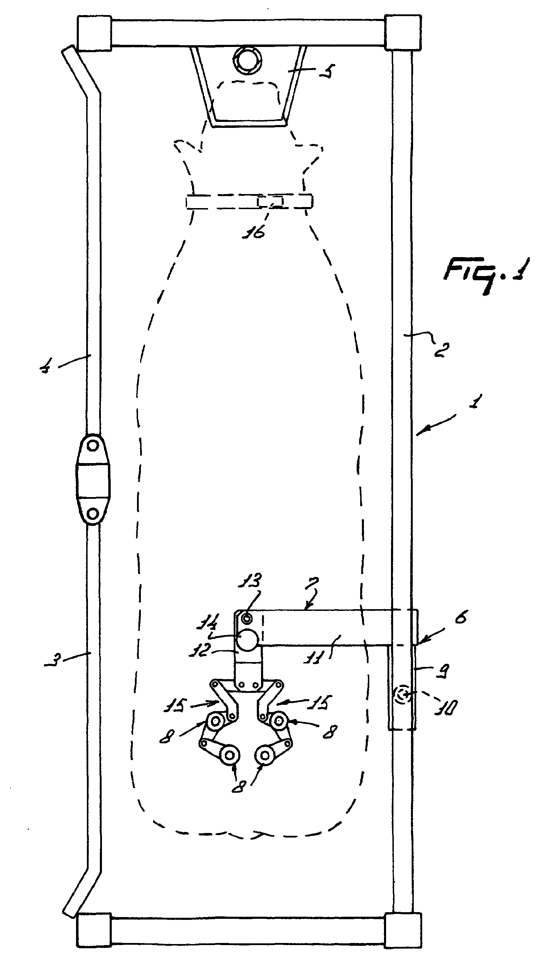

Figure 1 is a plan view of a milking box 1 which incorporates a railing 2 and at one side is provided with an entrance door 3 and an exit door 4. A feed trough 5 is secured to the railing 2 at the leading side of the milking box 1. A milking robot 6 is positioned at the side facing the entrance and exit door side. The milking robot 6 includes a robot arm 7, to the end of which the teat cups 8 are attached. The robot arm 7 is assembled from a first portion 9 which is rotatable about an upright shaft 10, a second portion 11 which extends substantially at a square angle to the first portion 9, and a third portion 12 which is rotatable about an upright shaft 13 and is connected to the other end of the second portion 11. The robot arm 7 can be moved in height as an integral whole by means of a cylinder, not further shown. On the third portion 12 there is provided a laser 14, with the aid of which the position of the teats of an animal to be milked is determined. Two pivotal arm constructions 15, each having two teat cups 8, are connected at the end of the third portion 12 to the third portion 12.

Round the neck of the cow there is further arranged a collar with a transponder 16 which forms part of a cow identification system, not further shown.

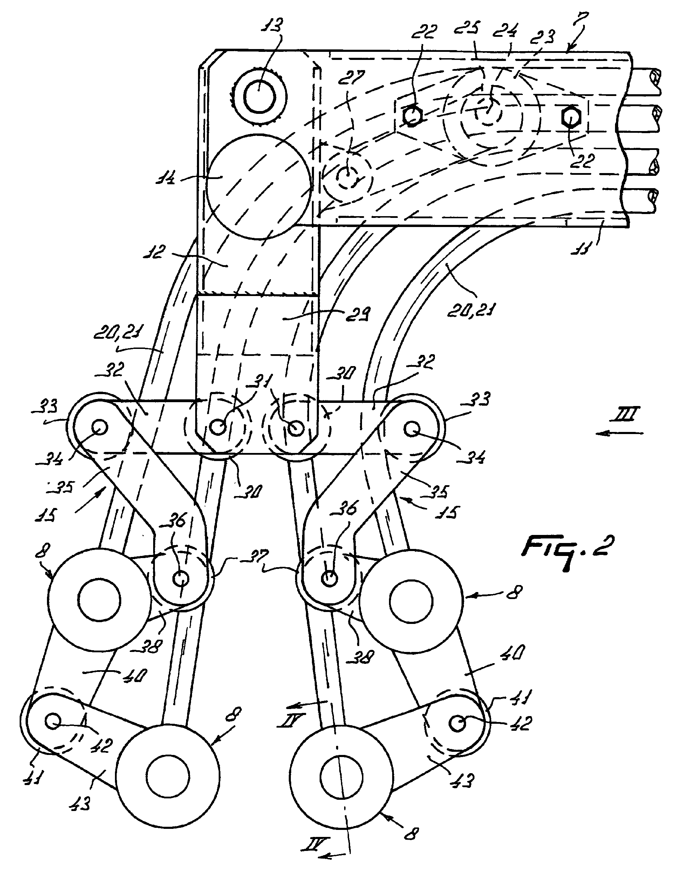

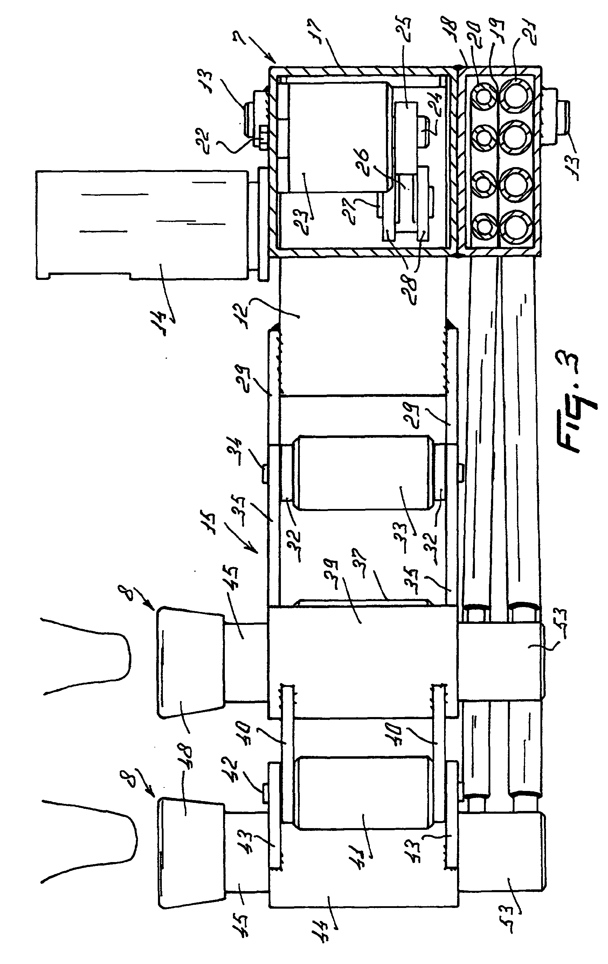

Figures 2 and 3 illustrate in detail the leading portion of the robot arm 7 with the pivotal arm constructions 15. The second portion 11 of the robot arm 7 is assembled from a first box-like beam 17 and therebelow a second box-like beam 18 (Figure 3). The second box-like beam 18 comprises two compartments which are separated by a partition 19. The pulsation tubes 20 of the teat cups 8 are stored in the upper compartment and the milk tubes 21 are stored in the lower compartment. In the first box-like beam 17 there is connected to the end by means of two screws 22 a stepping motor 23 which has a shaft 24, to which a disc 25 is rigidly and eccentrically secured. The eccentric disc 25 is bearing-supported in an arm 26, which has its other end placed pivotally about a shaft 27, which shaft 27 is connected to the third portion 12 by means of lugs 28. When the stepping motor is energized, the eccentric disc 25 forming part of an eccentric drive rotates, in response to which the arm 26 causes the third portion 12 to rotate about the shaft 13.

Strips 29 are attached to the upper and the lower side of the third portion 12. Two electric motors (stepping motors) 30 are arranged between the ends of the strips 29. At the lower and the upper side of an electric motor 30 a strip-like arm 32 is fitted on the shaft 31, which strip-like arms 32 are each rigidly connected by means of their other ends to a second stepping motor 33. The shafts 34 of the second stepping motors are each rigidly connected to two arms 35, which are rigidly connected by means of their other ends to a shaft 36 of a third stepping motor 37. The arms 35 are in the shape of a strip and include a first portion which linearly extends from the second stepping motor 33, as well as a second portion contiguous thereto, which encloses an angle with the first portion of the strip-like arm 35. The angle the first and the second portions of the strip-like arm 35 enclose is approximately 135°.

The third stepping motors 37 are connected at their lower and upper sides to a housing by means of two arms 38, whose other ends are connected to a cylindrical holder 39 surrounding a teat cup 8 (Figure 3). To each of the holders 39 there are attached two further arms 40, which together with the arms 38 enclose an angle of approximately 135°. At the other end of the arms 40, a fourth stepping motor 41 is rigidly secured between the arms 40. Rigidly connected to the shafts 42 of the fourth stepping motor 41 are the two strip-shaped arms 43, which have their other ends rigidly connected to a cylindrical holder 44 placed around a further teat cup 8.

By energizing the stepping motors 30, 33, 37 and 41 the arms 32, 35, 38, 40 and 43 rotate relative to each other and thus it is possible to move the teat cups 8 in a horizontal plane, with the intermediary of the pivotal arm constructions 15.

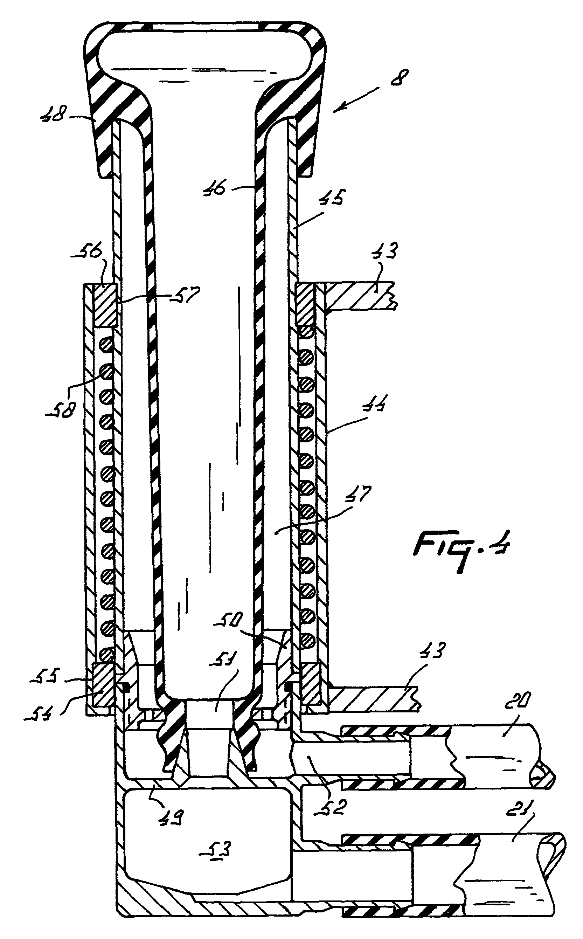

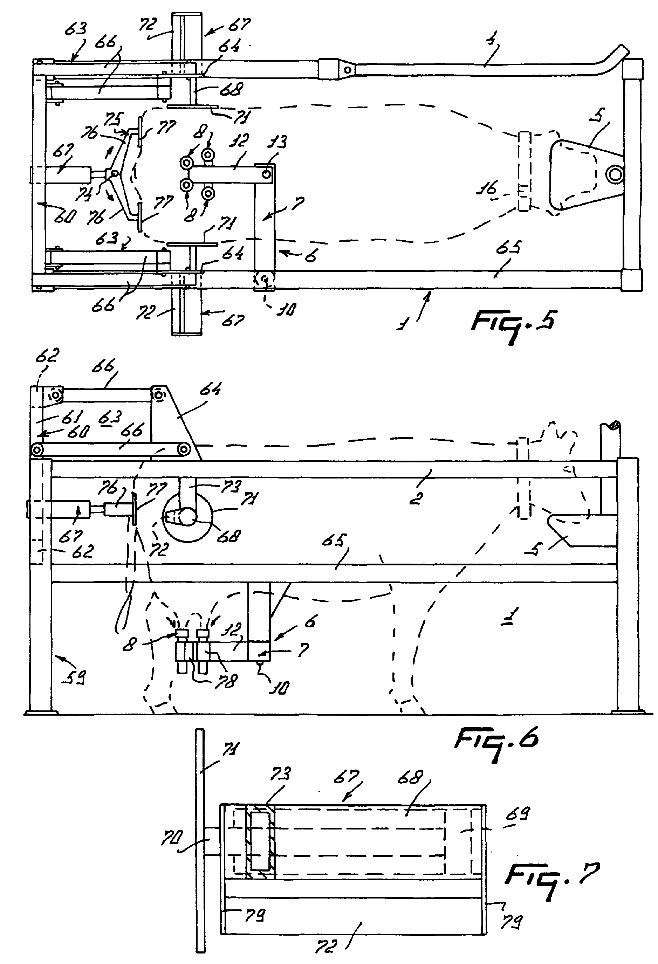

Figure 4 is a longitudinal cross-sectional view of a teat cup; this cup is assembled in customary manner from a fixed, e.g. metal, sleeve 45 having in its interior an inner wall 46 made of a flexible material, e.g. rubber, and a rubber cap 48 which seals at the upper side the intermediate space 47 between the sleeve 45 and the inner wall 46. The space between the sleeve 45 and the inner wall 46 is sealed at the bottom side by a washer 49, whilst thereabove, arranged between the sleeve 45 and the inner wall 46, there is present a ring 50 which has an aperture 51. Between the washer 49 and the ring 50 there is a space, in which via an aperture 52 a pulsating vacuum is developed by a pulsation system through the line 20, which in the space between the sleeve 45 and the inner wall 46 produces a pulsating vacuum which, when the teat cup 8 has been connected in the proper manner, causes the inner wall 46 to fit tightly around the teat and to move outwards again, respectively, so that the rhythmic motions around the teat required for milking are obtained. In the bottom part of the teat cup 8 there is furthermore a buffer space 53, which minimizes fluctuations in the vacuum.

Connected to this buffer space 53 there is the line 21 which is used for the discharge of milk and leads to a milk meter. The cylindrical holder 39 (44) is disposed around the sleeve 45 near the midway point of the teat cup 8. An annular sleeve bearing 54 is fitted near the bottom side of the holder 39 in a circular groove 55 in the holder 39 (44). In the region of the upper side of the cylindrical holder 39, a second annular sleeve bearing 56 is fitted in a circular groove 57 in the sleeve 45. The sleeve bearings 54 and 56 are preferably made of the durable Teflon. A compression spring 58 is confined between the sleeve bearings 54 and 56. The spring 58 has a spring rate which allows a teat cup 8 to be moved downwards relative to the holder 39 with a slight force. Since all four teat cups 8 are supported in a holder and each of the teat cups 8 is capable of being moved downwards against the action of a spring, it is possible to connect the teat cups 8 correctly to the teats of an animal to be milked, even when the teats are not located at the same level (a teat is enclosed along its full length by a teat cup).

The construction as described in the foregoing operates as follows:

After having entered the milk box 1 via the entrance door 3, the animal is identified by means of the transponder 16 and the cow identification system, not further shown. By means of the robot arm 7 the teat cups 8 are moved towards the teats, whilst with the aid of the laser 14 the coordinates of the teats are determined. On the basis of these coordinates, with the intermediary of the pivotal arm construction 15, the position of the teat cups 8 is altered (fine positioning). For this purpose, the stepping motors 23, 30, 33, 37 and 41 can be energized. When all four teat cups 8 are in the correct position, the robot arm 7 is moved upwards by means of a cylinder, not further shown, and all four teat cups 8 are simultaneously connected to the teats. When there is a difference in height between the teats, this difference in height is bridged in that a teat cup 8 is movable relative to its holder against the action of a spring. After the teat cups 8 have been connected to the teats or, if so desired, during the connection of the teat cups to the teats, the free-wheel device of each stepping motor 30, 33, 37 and 41 is released to provide that the teat cups 8 are freely movable in a horizontal plane. Thus, it is possible for the teat cups 8 to be adapted in a natural manner to the teat configuration. Also during milking, it is possible to have the free-wheel devices operative, so that when the animal moves, the teat cups 8 track the teats after they have changed their position. Thus, it is prevented that the teat cups 8 are inadvertently disconnected from the teats. Each of the stepping motors 23, 30, 33, 37 and 41 includes a responder (sensor), not further shown, which applies a signal to the computer about the position of a teat cup 8 connected to a teat. Each time an animal is milked, the teat configuration is determined in the computer and, if this configuration has changed with respect to a previous milking turn, it is replaced by the teat configuration determined last. The determination of the teat configuration can be effected both with the laser 14 and with the sensors disposed in the stepping motors 23, 30, 33, 37 and 41. When an animal starts a new lactation period, then the teat configuration determined last is not read from the memory, but the teat configuration determined at the beginning of the previous lactation period is read.

Figures 5 to 7 show a second embodiment of a milking box with a robot arm and detection means; in these drawings, corresponding components of the construction have been given the same reference numerals. In the embodiment of Figure 5, the entrance door 59 of the milking box 1 is formed by a movable rear wall 60 at the rear side of the milking box 1. The partition 60 is constituted by a frame consisting of two vertical tubes 61, between which spaced-apart cross beams 62 are arranged. The partition 60 is connected by means of two four-bar linkages 63, which are connected at one end to the upper cross beam 62, via struts 64 to the upper beam 65 of the railing 2 (Figure 6). The two four-bar linkages 63 each comprise two arms 66, the lower arm 66 of which has a length which exceeds the length of the upper arm 66. Using a cylinder, not further shown, which is connected to one of the arms 66 and has its other end connected to the railing 2, it is possible to pivot the partition 60 upwardly to above the railing 2, in order to allow an animal to enter the milking box 1. Attached to the entrance door 59 of the milking box 1 and to the two side walls of the milking box 1 there are arranged detection means 67, with the aid of which the position of at least a portion of an animal relative to a reference point can be determined. The detection means 67 include mechanical sensors 68, which are constituted by a pneumatic cylinder with a piston 69 and connected thereto a piston rod 70 which at its other end is provided with a round plate-shaped stop 71 (Figure 7). At the two ends of the pneumatic cylinder lugs 72 have been attached, between which, at some distance from the cylinder housing, an inductive telemeter 79 is disposed, with the aid of which the position of the piston 69 can be determined. At both sides of the milking box 1, the mechanical sensors 68 are connected via a beam 73 to the upper beam 65 of the railing 2 of the milking box 1. In the midway point of the lower cross beam 62 of the partition wall 60 there is also disposed a pneumatic cylinder 68 having a piston rod 70, at the end of which there is present a stop 75 which is rotatable about a shaft 74. The stop 75 includes two legs 76, each of which is provided at its end with a round plate 77.

Figures 5 and 6 further schematically illustrate a milking robot 6 having a robot arm 7 which is rotatable about a first vertical shaft 10, as well as about a second vertical shaft 13, whilst the robot arm can also be moved in height with the aid of a cylinder, not further shown. Rotation about the shafts 10 and 13 is effected in a similar manner as described for the first embodiment. The end of the third beam 12 of the robot arm 7 also carries four teat cups 8. Each of the teat cups 8 is supported in a holder 78. As was described for the previous embodiment, the holders 78 may be accommodated in a pivotal arm construction 15 for the purpose of positioning the cups relative to each other in a horizontal plane. It is, however, alternatively possible for the holders 78 to be rigidly connected to the third beam 12. The holders 78 may be of a construction with and also without a spring 58.

In addition, each of the teat cups 8 is connected to an air pump, not further shown, by means of which, at least for coupling the teat cups 8 to the teats of an animal to be milked, a relatively strong suction air stream is applied in the vicinity of and above the apertures thereof. In this situation, the additional air pump may be connected to each of the milk tubes 21, but it is alternatively possible that a third tube, not further shown, is connected to each of the teat cups 8 for the purpose of establishing a strong underpressure in each of the teat cups 8.

The construction according to the second embodiment operates as follows:

After an animal has entered the milking box 1 through the entrance door 59, then the identity of the animal is determined via the transponder 16. Thereafter the detection means 67 are actuated and the stops 71 and 75 of the mechanical sensors are pressed against the animal. On the basis of the positions of the pistons 69 of the mechanical sensors and the data supplied by the cow identification system, the position of the teats of the relevant animal can be determined with a reasonable accuracy. Thereafter, by means of the robot arm 7, the teat cups 8 are positioned under the teats. After the teat cups 8 have been positioned, the additional air pump is switched on, as a result of which a relatively strong suction air stream is applied near and above the apertures of the teat cups 8. During the upward motion of the robot arm 7 the teat cups are sucked, under the influence of the suction air stream, to the teats and/or the teats to the teat cups 8. After it has been ascertained by means of a sensor, not further shown, that a teat cup 8 has been connected to a teat, the additional air suction stream in the relevant teat cup 8 is interrupted, whereafter the milking operation can be started. As also in the first embodiment, the position of the connected teat cups can thereafter be checked again and optionally be changed.

It will be obvious that, in this embodiment, it is possible to use a laser 14 instead of the mechanical sensors 68.

## Claims

1. A method using a construction for milking animals, such as cows, comprising a milking robot (6) with teat cups (8), said method comprising the step of storing during the lactation period of an animal, the teat co-ordinates in a memory unit in order to be retrieved again therefrom at the beginning of a next lactation period for the purpose of positioning the teat cups (8), **characterized in that**, at the end of the lactation period of an animal, the teat co-ordinates are stored in a memory unit, and **in that** the stored teat co-ordinates are corrected by a factor, in order that the corrected teat co-ordinates can be used for the positioning of the teat cups (8) during a subsequent lactation period.

2. A method using a construction as claimed in claim 1, **characterized in that** the factor is an animal-dependent factor, and that for each animal an associated factor has been stored in the memory unit.

3. A method using a construction as claimed in claim 2, **characterized in that** a factor is determined and stored in the memory unit for each udder quarter.

4. A method using a construction as claimed in claim 1, **characterized in that** each time an animal is to be milked, the teat co-ordinates are determined and compared to the teat co-ordinates of the animal stored last, whilst said last teat co-ordinates are replaced by said first teat co-ordinates if there is question of a discrepancy.

5. A method using a construction as claimed in any one of the preceding claims, **characterized in that** the construction includes detection means (67), with the aid of which the position of at least part of the animal relative to a reference point is determined, which detection means (67) comprise mechanical sensors (68) that press against the hind side and against the flanks of the animal.

6. A method using a construction as claimed in claim 5, **characterized in that** the mechanical sensors (68) include a pneumatic cylinder, the position of whose piston (69) is electronically determined and passed on to the computer, whilst the end of the piston rod (70) of the pneumatic cylinder has a plate-like stop (77) which is pressed against the animal after she has taken up her position in a milking box (1).

## Patentansprüche

1. Verfahren unter Verwendung einer Vorrichtung zum Melken von Tieren, wie z. B. Kühen, die einen Melkroboter (6) mit Zitzenbechern (8) umfaßt, wobei das Verfahren den Verfahrensschritt des Speicherns der Zitzenkoordinaten eines Tieres während der Laktationsperiode in einer Speichereinheit umfaßt, um aus dieser zu Beginn einer darauffolgenden Laktationsperiode zum Positionieren der Zitzenbecher (8) wieder abgerufen zu werden,
**dadurch gekennzeichnet, daß** am Ende der Laktationsperiode eines Tieres die Zitzenkoordinaten in einer Speichereinheit gespeichert werden, und daß die gespeicherten Zitzenkoordinaten um einen Faktor korrigiert werden, damit die korrigierten Zitzenkoordinaten zum Positionieren der Zitzenbecher (8) während einer darauffolgenden Laktationsperiode verwendet werden können.

2. Verfahren unter Verwendung einer Vorrichtung nach Anspruch 1,
**dadurch gekennzeichnet, daß** der Faktor ein tierabhängiger Faktor ist, und daß für jedes Tier ein entsprechender Faktor in der Speichereinheit gespeichert ist.

3. Verfahren unter Verwendung einer Vorrichtung nach Anspruch 2,
**dadurch gekennzeichnet, daß** für jedes Euterviertel ein Faktor ermittelt und in der Speichereinheit gespeichert wird.

4. Verfahren unter Verwendung einer Vorrichtung nach Anspruch 1,
**dadurch gekennzeichnet, daß** bei jedem Melken eines Tieres die Zitzenkoordinaten ermittelt und mit den zuletzt gespeicherten Zitzenkoordinaten des Tieres verglichen werden, wobei die letzten Zitzenkoordinaten durch die ersten Zitzenkoordinaten ersetzt werden, wenn eine Diskrepanz auftritt.

5. Verfahren unter Verwendung einer Vorrichtung nach einem der vorhergehenden Ansprüche,
**dadurch gekennzeichnet, daß** die Vorrichtung eine Ermittlungsvorrichtung (67) enthält, mittels der die Position zumindest eines Teiles des Tieres relativ zu einem Bezugspunkt ermittelt wird, wobei die Ermittlungsvorrichtung (67) mechanische Sensoren (68) umfaßt, die gegen die Rückseite und gegen die Flanken des Tieres drücken.

6. Verfahren unter Verwendung einer Vorrichtung nach Anspruch 5,
**dadurch gekennzeichnet, daß** die mechanischen Sensoren (68) einen pneumatischen Zylinder enthalten, wobei die Position von dessen Kolben (69) elektronisch ermittelt und an den Computer übermittelt wird, wobei das Ende der Kolbenstange (70) des pneumatischen Zylinders einen plattenartigen Anschlag (77) aufweist, der gegen das Tier gedrückt wird, nachdem dieses seine Position in einer Melkbox (1) eingenommen hat.

## Revendications

1. Procédé utilisant une construction pour la traite d'animaux, tels que des vaches, comprenant un robot de traite (6) avec des gobelets trayeurs (8), ledit procédé comprenant l'étape consistant à mémoriser, au cours de la période de lactation d'un animal, les coordonnées de trayon dans une unité de mémoire afin d'être récupérées à nouveau à partir de celle-ci au début d'une période de lactation suivante afin de positionner les gobelets trayeurs (8), **caractérisé en ce que**, à la fin de la période de lactation d'un animal, les coordonnées de trayon sont mémorisées dans une unité de mémoire, et **en ce que** les coordonnées de trayon mémorisées sont corrigées par un facteur, afin que les coordonnées de trayon corrigées puissent être utilisées pour le positionnement des gobelets trayeurs (8) au cours d'une période de lactation ultérieure.

2. Procédé utilisant une construction selon la revendication 1, **caractérisé en ce que** le facteur est un facteur dépendant de l'animal, et **en ce que** pour chaque animal, un facteur associé a été mémorisé dans l'unité de mémoire.

3. Procédé utilisant une construction selon la revendication 2, **caractérisé en ce qu'**un facteur est déterminé et mémorisé dans l'unité de mémoire pour chaque quartier de pis.

4. Procédé utilisant une construction selon la revendication 1, **caractérisé en ce que** chaque fois qu'un animal doit être trait, les coordonnées de trayon sont déterminées et comparées aux coordonnées de trayon de l'animal mémorisées en dernier, tandis que lesdites dernières coordonnées de trayon sont remplacées par lesdites premières coordonnées de trayon s'il existe une divergence.

5. Procédé utilisant une construction selon l'une quelconque des revendications précédentes, **caractérisé en ce que** la construction comprend des moyens de détection (67), à l'aide desquels la position d'au moins une partie de l'animal par rapport à un point de référence est déterminée, lesquels moyens de détection (67) comprennent des capteurs mécaniques (68) qui appuient contre le côté postérieur et contre les flancs de l'animal.

6. Procédé utilisant une construction selon la revendication 5, **caractérisé en ce que** les capteurs mécaniques (68) comprennent un vérin pneumatique, la position de son piston (69) est déterminée électroniquement et transmise à l'ordinateur, tandis que l'extrémité de la tige de piston (70) du vérin pneumatique possède une butée en forme de plaque (77) qui appuie contre l'animal une fois que celui-ci a adopté sa position dans un box de traite (1).
